# EUROPEAN PATENT APPLICATION

(11) **EP 4 768 448 A1**
(43) Date of publication of application: **01.07.2026**
(21) Application number: 25212622.2
(22) Date of filing: 31.10.2025
(51) Int. Cl.: C02F 1/461, C02F 1/42

(54) **ELECTROLYSIS CELL DESIGN WITH BUFFER COMPARTMENT**

(30) Priority: 27.12.2024 TR 2024021006
(71) Applicant: Arçelik Anonim Sirketi, 34445 Istanbul (TR)
(72) Inventor: TARKUC, SIMGE, 34445 Istanbul (TR); SENGONUL, HUSEYIN, 34445 Istanbul (TR); YESILCUBUK, ALPER, 34445 Istanbul (TR); KAYISDAG, VAROL, 34445 Istanbul (TR)

(57) **Abstract**

The present invention relates to an electrolysis cell system (1) comprising a cathode compartment (2), an anode compartment (3), and a buffer compartment (5) which is positioned between the cathode and anode compartments (2, 3), a buffer compartment (5) having an anion exchange membrane (AEM) on the anode side and a hydrogen gas-blocking separator surface (6) on the cathode side, and flow channels (7) having separate inlet paths (8) and outlet paths (9) for supplying and withdrawing solutions to and from the cathode compartment (2), the buffer compartment (5), and the anode compartment (3).

## Description

The present invention relates to an electrolysis cell system and method for generating regeneration solutions for ion exchange resins used in water softening systems.

Water softening systems are widely used in various applications to reduce water hardness by removing calcium and magnesium ions. These systems typically use ion exchange resins to replace hardness-causing ions with sodium or hydrogen ions. The performance of washing and rinsing operations in appliances such as dishwashers and washing machines can be significantly affected by water hardness. To maintain optimal performance, the ion exchange resins used in the water softening systems require periodic regeneration.

The conventional water softening systems commonly use sodium-based ion exchange resins which require the user to add salt (NaCl) for regeneration. This approach requires regular maintenance and introduces additional costs and environmental concerns associated with salt usage and disposal thereof.

Electrolysis cells have been investigated as a potential method for generating regeneration solutions for the ion exchange resins. These cells typically consist of an anode compartment and a cathode compartment separated by one or more types of ion exchange membranes, such as anion exchange membranes (AEM), cation exchange membranes (CEM), or bipolar ion exchange membranes (BPM). However, the current electrolysis cell designs face several challenges which limit their efficiency and long-term performance.

A significant issue in the current electrolysis cell designs is the accumulation of hydrogen (H₂) and oxygen (O₂) gases on membrane surfaces over time. This gas buildup reduces the effective surface area of the membranes and electrodes, which leads to decreased cell efficiency and a diminished ability to produce regeneration solutions with the necessary conductivity and pH levels.

Another issue in the current electrolysis cells is inadequate flow distribution along the electrode surfaces. The current flow models often fail to utilize the entire active surface area of the electrodes, further reducing the performance of the cell and the ability thereof to produce solutions with the required properties for resin regeneration.

It has been recognized that there is a need for an improved electrolysis cell design which overcomes one or more of these problems.

The present invention relates to a water softening module which regenerates ion-exchange resins through electrochemical processes in order to remove hardness from water, operates without salt, and is environmentally friendly. The said system effectively removes hardness-causing ions in the water such as calcium (Ca²⁺) and magnesium (Mg²⁺).

The aim of the present invention is the realization of a water softening module which regenerates an ion-exchange resin without requiring salt, chemicals, or additives in the water softening system.

Another aim of the present invention is to provide resin regeneration with a water softening module operating in a closed loop.

Yet another aim of the present invention is to prevent salinization of soil and water resources since no sodium chloride or similar waste will be generated due to the absence of salt use.

Unlike conventional systems, the present invention is capable of performing regeneration without salt. This provides an environmentally friendly process and prevents the release of sodium ions into the environment.

By increasing the surface area of the electrolysis cell, a larger amount of acidic and basic solutions can be produced in the same period, and thus a faster regeneration process can be achieved.

The ion-selective membrane between the anode and cathode units prevents liquid transfer and allows only ion transfer, thereby preserving the purity of the acidic and basic solutions and increasing the effectiveness of the regeneration process.

Yet another aim of the present invention is to provide an efficient, low-cost, and environmentally friendly alternative, particularly for water softening.

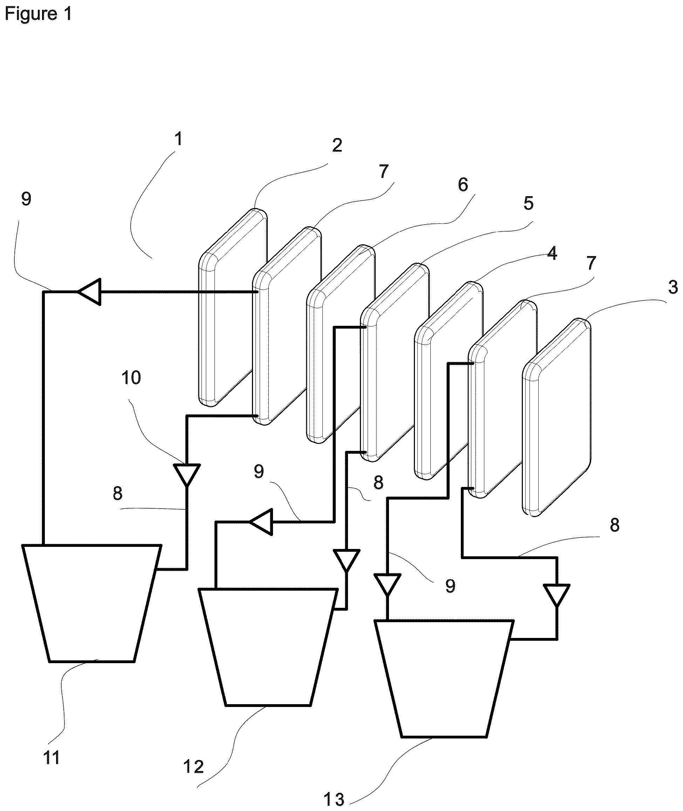

Figure 1: is the schematic view of the electrolysis cell system.

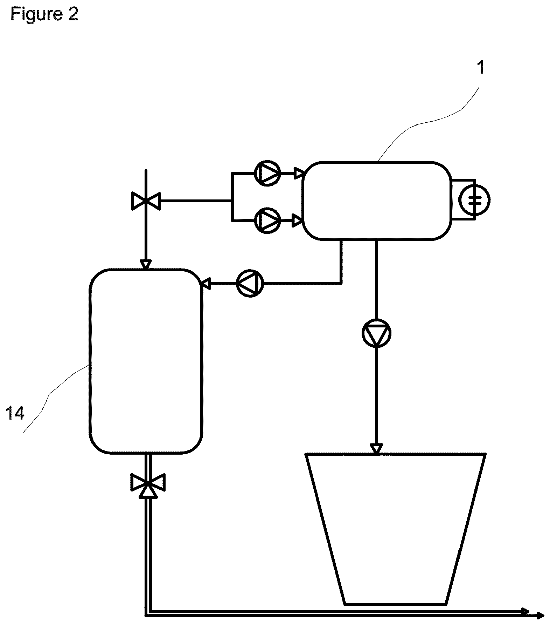

Figure 2: is the schematic view of a water softening and regeneration module.
   1. Electrolysis cell system
   2. Cathode compartment
   3. Anode compartment
   4. Membrane
   5. Buffer compartment
   6. Separator surface
   7. Flow channel
   8. Inlet path
   9. Outlet path
   10. Pump
   11. First tank
   12. Second tank
   13. Third tank
   14. Resin

The electrolysis cell (E) of the present invention comprises a cathode compartment (2), an anode compartment (3), and a buffer compartment (5) which is positioned between the cathode and anode compartments (2, 3). This configuration addresses the issue of gas accumulation on the membrane (4) surfaces and provides improved cell efficiency.

The buffer compartment (5) is separated from the anode compartment (3) by an anion exchange membrane (AEM) (4), and from the cathode compartment (2) by a hydrogen gas-blocking separator surface (6). This arrangement allows for the production of an acidic solution in the anode compartment (3), a basic solution or a solution with a pH value higher than that of the anode compartment (3) in the cathode compartment (2), and a buffer solution in the buffer compartment (5).

In an embodiment of the present invention, the electrolysis cell system (1) comprises flow channels (7) to circulate the solutions through each compartment (2, 3, 5). The said flow channels (7) have separate inlet paths (8) and outlet paths (9) for supplying and withdrawing solutions to and from the cathode compartment (2), the buffer compartment (5), and the anode compartment (3). This design ensures continuous operation and enables the active surface area of the electrodes to be maintained.

In an embodiment of the present invention, by incorporating the buffer compartment (5) and optimizing the solution flow, the electrolysis cell system (1) addresses the problem of gas accumulation on the membrane (4) surfaces. Thus, it is ensured that the performance of the cell is maintained over time and the solutions with the desired conductivity and pH levels for use in water treatment applications are produced in a consistent manner.

In an embodiment of the present invention, the cathode compartment (2) and the anode compartment (3) of the electrolysis cell system (1) are manufactured from materials such as platinum-coated titanium, stainless steel, or dimensionally stable anodes (DSA). The said electrode materials are selected for their durability and electrochemical properties and allow for efficient electrolysis reactions.

In an embodiment of the present invention, at least one type of membrane (4) is positioned between the cathode compartment (2) and the anode compartment (3). The membrane (4) may be an anion exchange membrane (AEM), a cation exchange membrane (CEM), or a bipolar ion exchange membrane (BPM). Different membrane combinations may be used to increase the number of operating cycles of the electrolysis cell system (1).

In an embodiment of the present invention, a buffer compartment (5) is disposed between the cathode compartment (2) and the anode compartment (3). The buffer compartment (5) comprises an anion exchange membrane (AEM) on the anode side and a hydrogen gas-blocking separator surface (6) on the cathode side. This arrangement helps prevent gas accumulation on the membrane (4) surfaces, which can reduce the active surface area of the electrodes and lower cell efficiency.

In an embodiment of the present invention, the hydrogen gas-blocking separator surface (6) allows ion transfer while preventing hydrogen gas from passing from the cathode compartment (2) to the buffer compartment (5). This feature enables the stability and efficiency of the electrolysis process to be maintained.

In an embodiment of the present invention, the electrolysis cell system (1) comprises the flow channels (7) to circulate the solutions through the cathode compartment (2), the buffer compartment (5), and the anode compartment (3). The said flow channels (7) comprise separate inlet paths (8) and outlet paths (9) for supplying and withdrawing solutions to and from each compartment (2, 3, 5). The flow channel (7) design ensures the uniform distribution of solutions along the electrode surfaces and supports the preservation of the active surface areas of the electrodes. In the electrolysis cell system (1), the inlet path (8) is provided at the lower part of the cell system (1), while the outlet path (9) is provided at the upper part thereof.

In an embodiment of the present invention, the arrangement of the said components in the electrolysis cell system (1) allows for the generation of an acidic solution in the anode compartment (3) which can be used to regenerate a hydrogen-ion exchange resin (14). Moreover, a basic solution is produced in the cathode compartment (2) and the buffer compartment (5), which can be used as the washing water in various embodiments.

In an embodiment of the present invention, the electrolysis cell system (1) comprises the circulation of solutions between different compartments (2, 3, 5) and the generation of acidic and basic solutions or solutions with a pH value higher than that of the anode compartment (3) through electrochemical reactions.

In an embodiment of the present invention, the electrolysis cell system (1) comprises supply or suction pumps (10) for circulating the solutions through the flow channels (7). The said pumps (10) facilitate the movement of solutions between the compartments (2, 3, 5) and the respective tanks thereof. The use of pumps (10) ensures a consistent solution flow, which is important for maintaining the efficiency of the electrolysis process.

In an embodiment of the present invention, prior to initiating the electrolysis process, the water from the water source is passed through an ion exchange resin (14), and the electrolysis cell system (1) comprises a first tank (11) where the water is collected for the cathode compartment (2), a second tank (12) where the water is collected for the buffer compartment (5), and a third tank (13) where the water is collected for the anode compartment (3). The solution circulation between the tanks (11, 12, 13) and the flow channels (7) is initiated before a potential is applied to the electrolysis cell system (1).

In an embodiment of the present invention, when a potential difference is applied between the cathode compartment (2) and the anode compartment (3), electrochemical reactions occur at the electrode surfaces. In the cathode compartment (2), a hydrogen evolution reaction (HER) takes place, producing hydrogen gas and hydroxide ions. This results in a basic solution in which the concentration of hydroxide ions is higher than that of hydrogen ions. In the anode compartment (3), an oxygen evolution reaction (OER) occurs, producing oxygen gas and hydrogen ions. This results in an acidic solution in which the concentration of hydrogen ions is higher than that of hydroxide ions.

In an embodiment of the present invention, the anion exchange membrane (AEM) (4) in the buffer compartment (5) allows for selective ion transfer, further enhancing the separation of acidic and basic solutions. Over time, due to ion transfer across the hydrogen gas-blocking separator surface (6) between the buffer compartment (5) and the cathode compartment (2), the solution in the buffer compartment (5) also becomes basic.

In an embodiment of the present invention, as the electrolysis process continues, the solutions circulate through the respective flow channels (7), the first tank (11), the second tank (12), and the third tank (13). The basic solutions or the solutions with a pH value higher than that of the anode compartment (3), which are generated in the cathode compartment (2) and the buffer compartment (5), are collected in the third tank (13) and the second tank (12), respectively, and may be used as the washing water upon reaching the required conductivity. The acidic solution generated in the anode compartment (3) is collected in the first tank (11) and is used to regenerate the hydrogen-ion exchange resin (14). This continuous operation enables the electrolysis cell system (1) to produce solutions with the desired hardness, pH, and conductivity levels for various water treatment embodiments, such as the regeneration of ion exchange resins (14) and the supply of washing water for cleaning or washing-drying devices.

In an embodiment of the present invention, the second tank (12) and the third tank (13) can be a single shared tank.

In an embodiment of the present invention, the inclusion of a buffer compartment (5) between the cathode compartment (2) and the anode compartment (3) in the electrolysis cell system (1) significantly improves the performance and stability of the system. The buffer compartment (5) prevents gas accumulation on the membrane (4) surfaces, thus maintaining the active surface area of the electrodes. This allows for the more consistent and efficient generation of acidic and basic solutions over extended operating times.

In an embodiment of the present invention, the design of the flow channels (7) having separate inlet paths (8) and outlet paths (9) for each compartment (2, 3, 5) ensures the optimized circulation of solutions throughout the electrolysis cell system (1). The optimized flow channel (7) structure and the buffer compartment (5) configuration also contribute to the increased energy efficiency of the electrolysis cell system (1). By maintaining the active surface area of the electrodes and preventing gas accumulation, the system can operate at lower voltages while producing the required solutions and potentially reduce energy consumption.

In an embodiment of the present invention, the hydrogen gas-blocking separator surface (6) in the buffer compartment (5) improves the stability of the electrolysis process by allowing the ion transfer while preventing hydrogen gas from passing from the cathode compartment (2) into the buffer compartment (5), and ensures that the desired pH levels is maintained in each compartment (2, 3, 5).

In an embodiment of the present invention, the ability of the electrolysis cell system (1) to produce three different solutions, which are acidic, basic, and buffer, from a single unit provides versatility in the water treatment embodiments. The acidic solution may be used to regenerate the hydrogen-ion exchange resins (14), while the basic solutions may serve as the washing water in various cleaning embodiments.

In an embodiment of the present invention, by addressing the issue of gas accumulation on the membrane (4) surfaces, the electrolysis cell system (1) maintains its performance over time and allows for the consistent production of solutions with the desired conductivity and pH levels. This stability leads to reduced maintenance requirements and increased operational efficiency in the water treatment processes.

In an embodiment of the present invention, the electrolysis cell system (1) provides enhanced performance, stability, and efficiency for the water treatment embodiments, particularly in the regeneration of ion exchange resins (14) and the generation of the washing water for washing machines, dishwashers, and laundry dryers.

In an embodiment of the present invention, the electrolysis cell system (1) comprises different membrane (4) combinations. For example, a cation exchange membrane (CEM) may be used in the buffer compartment (5) instead of an anion exchange membrane (AEM). Alternatively, a bipolar ion exchange membrane (BPM) may be used to create a more distinct separation between the acidic and basic solutions generated in the system.

In an embodiment of the present invention, the electrode materials may be changed to optimize the electrolysis process for specific embodiments. While platinum-coated titanium, stainless steel, and dimensionally stable anodes (DSA) are suitable options, other materials such as carbon-based electrodes or mixed metal oxides may also be used. The selection of electrode material affects the efficiency of the hydrogen evolution reaction (HER) and oxygen evolution reaction (OER), as well as the overall durability of the system.

In an embodiment of the present invention, the electrolysis cell system (1) comprises serpentine flow channels (7) or interlaced flow fields (7) to further improve solution distribution and gas removal, increase mass transfer, and reduce gas accumulation on the electrode surfaces. The flow channel (7) geometry may be optimized according to the specific requirements of the embodiment, such as desired flow rates or pressure drops.

In an embodiment of the present invention, the hydrogen gas-blocking separator surface (6) may be replaced with alternative gas separation units such as microporous membranes or hollow fiber membranes. These alternatives offer varying levels of gas separation efficiency or ion transfer capabilities, allowing for the customization of the buffer compartment (5) performance.

In an embodiment of the present invention, a heat exchanger may be integrated into the electrolysis cell system (1) to control the temperature of the circulating solutions, which increases reaction kinetics and overall system efficiency.

In certain embodiments, the electrolysis cell system (1) can be scaled to meet different production volumes. This scaling involves adjusting the size and number of individual cells and modifying the design of flow channels (7) and pumps (10) to maintain optimal performance at different scales.

In an embodiment of the present invention, instead of separate tanks for acidic, basic, and buffer solutions, a single-compartment tank may be used.

In an embodiment of the present invention, the electrolysis cell system (1) comprises the first tank (11) corresponding to the cathode compartment (2), the second tank (12) corresponding to the buffer compartment (5), and the third tank (13) corresponding to the anode compartment (3) for collecting and circulating the solutions in the cathode compartment (2), the buffer compartment (5), and the anode compartment (3), respectively; or a single tank having a first compartment corresponding to the cathode compartment (2), a second compartment corresponding to the buffer compartment (5), and a third compartment corresponding to the anode compartment (3) for collecting and circulating the solutions in the cathode compartment (2), buffer compartment (5), and anode compartment (3).

In an embodiment of the present invention, the third tank (13) collects the acidic solution generated in the anode compartment (3). The pH value of this acidic solution is less than 7, and serves as a regeneration solution for the hydrogen-ion exchange resin (14) in the water softening system. The use of the acidic solution generated by electrolysis eliminates the need for adding external chemicals such as salt (NaCl) for resin regeneration. This approach reduces operational costs and minimizes the environmental impact associated with traditional regeneration methods.

In an embodiment of the present invention, the first tank (11) and second tank (12) respectively collect the basic solutions generated in the cathode compartment (2) and buffer compartment (5). These solutions have a pH value greater than 7 and are suitable for use as the washing water in various embodiments including washing and washing-drying machines. The use of these basic solutions produced by means of electrolysis for washing purposes can increase cleaning efficiency and reduce the need for additional chemical detergents.

In an embodiment of the present invention, the integration of the electrolysis cell system (1) with the water softening systems ensures closed-loop operation. The water coming from the main source is first passed through the ion-exchange resin (14) to remove hardness-causing ions such as Ca²⁺ and Mg²⁺. The softened water is then used to fill the first tank (11), second tank (12), and third tank (13) for the electrolysis process. This arrangement enables the electrolysis cell system (1) to operate with pretreated water, enhancing the efficiency and economic life thereof.

By using the electrolysis cell system (1) for both resin (14) regeneration and washing water production, the water treatment facilities can achieve higher operational efficiency. The system eliminates the need for separate chemical storage and dosing systems typically required for conventional resin regeneration methods. This simplification of the water treatment process can lead to reduced maintenance requirements and lower operational costs.

Moreover, the electrolysis-based approach offers environmental benefits compared to traditional salt-based regeneration methods. By eliminating the need for adding salt, the system reduces the discharge of chloride ions into the wastewater streams, which can be beneficial for ecosystems and wastewater treatment processes.

In an embodiment of the present invention, the water softening and resin regeneration module comprising the electrolysis cell system (1) is adapted to the washing and washing-drying machines.

In an embodiment of the present invention, the electrolysis cell system (1) comprises a water softening module which is positioned anywhere on the body of washing and washing-drying machines.

In an embodiment of the present invention, the electrolysis cell system (1), as described above, is provided in a washing compartment, detergent compartment, any area between the body and casing, or on the surface of the door facing the washing compartment in the washing and washing-drying machines.

An embodiment of the present invention discloses a method for operating an electrolysis cell system (1).

The integration also provides flexibility in the water treatment operations. The electrolysis cell system (1) can be scaled to match the capacity of the water softening system so as to ensure sufficient supply of regeneration solution and washing water. Moreover, the production of both acidic and basic solutions in a single unit offers versatility in meeting various water treatment needs within a facility.

The present invention is a method for operating an electrolysis cell system (1), comprising the following steps:
a. Obtaining softened water by passing the water taken from the mains through a hydrogen-ion exchange resin (14),
b. Directing the water into the third tank (13) as a regeneration solution tank and into the first tank (11) as a cathode solution tank,
c. Delivering the regeneration and cathode solutions to the electrolysis cell (E) via the pumps (10),
d. Applying a predetermined amount of potential to the electrolysis cell (E) to process the regeneration solution,
e. Monitoring the electrolysis process by the control unit based on time and current drop,
f. Transferring the processed solution from the electrolysis cell (E) to the second tank (12) via the outlet path (9),
g. Preparing the washing water according to the target hardness value.

In an embodiment of the present invention, the method for operating an electrolysis cell system (1) comprises the step of providing selective permeability by the membrane (4) in the system having an ion-selective structure so as to prevent unwanted transfer of ions between the cathode compartment (2) and the anode compartment (3).

In an embodiment of the present invention, the method for operating an electrolysis cell system (1) comprises the step of automatically turning off the system by the control unit and stopping the pump (10) flow when the reaction in the electrolysis cell (E) ends.

In an embodiment of the present invention, the method for operating an electrolysis cell system (1) comprises the step of making the regeneration solution reusable through oxidation reactions occurring in the anode compartment (3).

In an embodiment of the present invention, the method for operating an electrolysis cell system (1) comprises the step of measuring the flow rate of the water entering the electrolysis cell (E) by means of a sensor provided on the flow channel (7), and optimizing the flow rate by the control unit.

In an embodiment of the present invention, the method for operating an electrolysis cell system (1) comprises the step of pumping the solution taken from the cathode compartment (2) to the first tank (11) and sending the same to the electrolysis cell (E) in accordance with the targeted hardness value.

## Claims

1. An electrolysis cell system (1) **characterized by** a cathode compartment (2), an anode compartment (3), and a buffer compartment (5) which is positioned between the cathode and anode compartments (2, 3), a buffer compartment (5) having an anion exchange membrane (AEM) on the anode side and a hydrogen gas-blocking separator surface (6) on the cathode side, and flow channels (7) having separate inlet paths (8) and outlet paths (9) for supplying and withdrawing solutions to and from the cathode compartment (2), the buffer compartment (5), and the anode compartment (3).

2. An electrolysis cell system (1) as in Claim 1, **characterized by** the first tank (11) corresponding to the cathode compartment (2), the second tank (12) corresponding to the buffer compartment (5), and the third tank (13) corresponding to the anode compartment (3) for collecting and circulating the solutions in the cathode compartment (2), the buffer compartment (5), and the anode compartment (3), respectively; or a single tank having a first compartment corresponding to the cathode compartment (2), a second compartment corresponding to the buffer compartment (5), and a third compartment corresponding to the anode compartment (3) for collecting and circulating the solutions in the cathode compartment (2), buffer compartment (5), and anode compartment (3).

3. An electrolysis cell system (1) as in Claim 1 or 2, **characterized by** producing an acidic solution in the anode compartment (3) to regenerate the hydrogen-ion exchange resin (14), and a basic solution in the cathode compartment (2) and the buffer compartment (5) to be used as the washing water.

4. An electrolysis cell system (1) as in any one of the above claims, **characterized by** at least one membrane (4) selected from among anion exchange membranes (AEM), cation exchange membranes (CEM), and bipolar ion exchange membranes (BPM).

5. An electrolysis cell system (1) as in any one of the above claims, **characterized in that** the pH value of the acidic solution produced in the anode compartment (3) is less than 7.

6. An electrolysis cell system (1) as in any one of the above claims, **characterized in that** the pH value of the basic solution produced in the cathode compartment (2) and the buffer compartment (5) is greater than 7, or the pH value is higher than the pH value of the anode compartment (3).

7. An electrolysis cell system (1) as in any one of the above claims, **characterized by** pumps (10) for circulating the solutions along the flow channels (7).

8. An electrolysis cell system (1) as in any one of the above claims, **characterized by** the hydrogen gas-blocking separator surface (6) which allows ion transfer and which prevents hydrogen gas from passing from the cathode compartment (2) to the buffer compartment (5).

9. A method for operating an electrolysis cell system (1) as in any one of Claims 1 to 8, **characterized by** the steps of:
a. Obtaining softened water by passing the water taken from the mains through a hydrogen-ion exchange resin (14),
b. Directing the water into the third tank (13) as a regeneration solution tank and into the first tank (11) as a cathode solution tank,
c. Delivering the regeneration and cathode solutions to the electrolysis cell (E) via the pumps (10),
d. Applying a predetermined amount of potential to the electrolysis cell (E) to process the regeneration solution,
e. Monitoring the electrolysis process by the control unit based on time and current drop,
f. Transferring the processed solution from the electrolysis cell (E) to the second tank (12) via the outlet path (9),
g. Preparing the washing water according to the target hardness value.

10. A method for operating an electrolysis cell system (1) as in Claim 9, **characterized by** the step of providing selective permeability by the membrane (4) in the system having an ion-selective structure so as to prevent unwanted transfer of ions between the cathode compartment (2) and the anode compartment (3).

11. A method for operating an electrolysis cell system (1) as in Claim 10, **characterized by** the step of automatically turning off the electrolysis cell system (1) by the control unit and stopping the pump (10) flow when the reaction in the electrolysis cell (E) ends.

12. A method for operating an electrolysis cell system (1) as in Claim 11, **characterized by** the step of making the regeneration solution reusable through oxidation reactions occurring in the anode compartment (3).

13. A method for operating an electrolysis cell system (1) as in Claim 12, **characterized by** the step of measuring the flow rate of the water entering the electrolysis cell (E) by means of a sensor provided on the flow channel (7), and optimizing the flow rate by the control unit.

14. A method for operating an electrolysis cell system (1) as in Claim 13, **characterized by** the step of pumping the solution taken from the cathode compartment (2) to the first tank (11) and sending the same to the electrolysis cell (E) in accordance with the targeted hardness value.

15. A washing or washing-drying machine, **characterized by** an electrolysis cell system (1) as in any one of Claims 1 to 8, positioned in a washing compartment, in the detergent compartment, in any area between the body and the casing, or on the surface of the door facing the washing compartment.
